Europäisches Patentamt

European Patent Office

Office européen des brevets

(11) Veröffentlichungsnummer: **0 297 257 B1**

# EUROPÄISCHE PATENTSCHRIFT

(45) Veröffentlichungstag der Patentschrift: **04.12.91**

(21) Anmeldenummer: **88107684.8**

(22) Anmeldetag: **13.05.88**

(51) Int. Cl.⁵: **B29C 43/08**, B29C 43/34, B29C 31/04, B29C 43/50, B29C 31/00

(54) **Anlage zum Herstellen von Verpackungsbehältern.**

(30) Priorität: **13.05.87 CH 1830/87**

(43) Veröffentlichungstag der Anmeldung:
**04.01.89 Patentblatt 89/01**

(45) Bekanntmachung des Hinweises auf die
Patenterteilung:
**04.12.91 Patentblatt 91/49**

(84) Benannte Vertragsstaaten:
**AT CH DE ES FR GB IT LI SE**

(56) Entgegenhaltungen:
**EP-A- 0 162 456
EP-A- 0 175 642
DE-C- 3 212 268
FR-A- 2 596 699
GB-A- 2 053 077**

(73) Patentinhaber: **KMK Karl Maegerle Lizenz AG
Baarerstrasse 57
CH-6300 ZUG(CH)**

(72) Erfinder: **Schwyn,Bernhard
Bergstrasse 39
CH-6004 Luzern(CH)**
Erfinder: **Uberegger,Heinrich
Haldenstrasse 12
CH 8344 Adetswil(CH)**

(74) Vertreter: **Hiebsch, Gerhard F., Dipl.-Ing. et al
Hiebsch & Peege Patentanwälte Postfach464
Erzbergerstrasse 5a
W-7700 Singen 1(DE)**

## Beschreibung

Die Erfindung betrifft eine Anlage zum Herstellen von Verpackungsbehältern nach dem Oberbegriff von Anspruch 1.

Aus der DE-OS 30 23 415.2 ist eine Anlage dieser Art bekannt, bei welcher die Formen zur Bewegung auf der Umlaufbahn auf einem schrittweise bewegten Drehtisch angeordnet sind. Während sich die Matrizen starr auf dem Drehtisch abstützen sind die Dorne schwenkbar sowie in den Arbeitsachsen verschiebbar an diesem befestigt. Die Betätigungsmittel für die Verschiebung der Dorne sind an dem Drehtisch zugeordneten Arbeitsstationen angebracht, die in der Drehrichtung des Drehtisches der Materialgeberstation nachfolgen. Die Betätigungsmittel wirken im Stillstand des Drehtisches jeweils auf einen Dorn ein, um den Pressvorgang einzuleiten bzw. den Dornrückzug zu veranlassen.

Ferner ist eine solche Anlage auch aus der EP-A-0 175 642 bekannt.

Für Pressverfahren der hier angewendeten Art gilt, da der Kunststoff in offenem Zustand in die Form eingebracht wird, dass bis zur tatsächlichen Verformung durch Pressen zumindest jene Zeit verstreicht, die zum Schliessen der Form bzw. zur Ausübung der Presskraft notwendig ist. Wird der Kunststoff in durch Wärme plastifizierter Form in die Matrize eingebracht und ist diese wie bei industrieller Anwendung gekühlt, so kann sich die zwischen der Einbringung und der Verpressung verstreichende Zeit nachteilig auf die Qualität und/oder das Aussehen des verpressten Gegenstandes auswirken.

Bei einer Anlage der angegebenen Art sind diese Erwägungen deshalb relevant, weil für das Einbringen des Kunststoffes Materialgeber-Düse und Matrize eine gemeinsame Achslage einnehmen müssen.

Die Verweilzeit des Kunststoffes in unverpresstem Zustand in der Matrize umfasst damit notwendigerweise jenen Zeitabschnitt, welchen der Drehtisch benötigt, um die Matrize aus der jene Achslage gewährleistenden Station zu der den Pressvorgang einleitenden Station zu transportieren.

Aufgabe der Erfindung ist nun, die Verkürzung der Verweilzeit des Kunststoffes in unverpresstem Zustand in der Form dadurch zu ermöglichen, dass das Verpressen unabhängig vom Weg und der Geschwindigkeit der Bewegung von einer Materialgeberstation zu einer den Pressvorgang einleitenden Arbeitsstation durchgeführt wird.

Die Lösung dieser Aufgabe gelingt erfindungsgemäss mit den Merkmalen des Kennzeichens von Anspruch 1.

Durch die Zusammenfassung nicht nur der Teile jeder Form - Matrize und Dorn - sondern auch ihrer Betätigungsmittel zu einer Arbeitseinheit, kann demnach der Pressvorgang während der Bewegung dieser Arbeitseinheit auf der Umlaufbahn einsetzen.

Die mit Hilfe von Tragrahmen gebildeten Arbeitseinheiten gestatten grundsätzlich auf einen Drehkörper, z.B. einen Drehtisch für den Transport der Formen von Station zu Station zu verzichten. Damit ist es möglich, die Umlaufbahn der Formen anders als kreisförmig auszulegen. Beispielsweise kann die Umlaufbahn gerade Teile aufweisen, entlang welchen einen Teil oder alle Arbeitsstationen angeordnet sind.

Die Tragrahmen bringen unabhängig von der Form der Umlaufbahn den Vorteil, daß die Kräfte, die zur Erzeugung des notwendigen Verformungsdruckes im Kunststoff aufgebracht werden müssen, in einem in sich geschlossenen System abgefangen werden können, was die Herstellung qualitativ hochwertiger Verpackungsbehälter erleichtert.

Nachfolgend ist die Erfindung an einem Ausführungsbeispiel einer Anlage und unter Bezugnahme auf die Zeichnungen näher erläutert. Es zeigen:

Fig. 1:     eine Anlage zum Herstellen von Verpackungstuben schematisch im Grundriß;

Fig. 2:     den Drehkörper mit Arbeitseinheit und Trageinheit, teilweise im Vertikalschnitt;

Fig. 3:     in Vorderansicht einen Ausschnitt aus Fig. 2;

Fig. 4:     die Zuführvorrichtung einer Materialgeberstation mit dem Matrizengehäuse einer Arbeitseinheit im Aufriß;

Fig. 5:     zwei sich folgende Matrizengehäuse in unterschiedlichen Stellungen im Grundriß;

Fig. 6:     eine Arbeitseinheit in der Arbeitsstellung in Vorderansicht dargestellt;

Fig. 7:     die Arbeitseinheit nach Fig. 6 im Aufriß dargestellt und

Fig. 8:     die Umsetzstation schematisch im Aufriß.

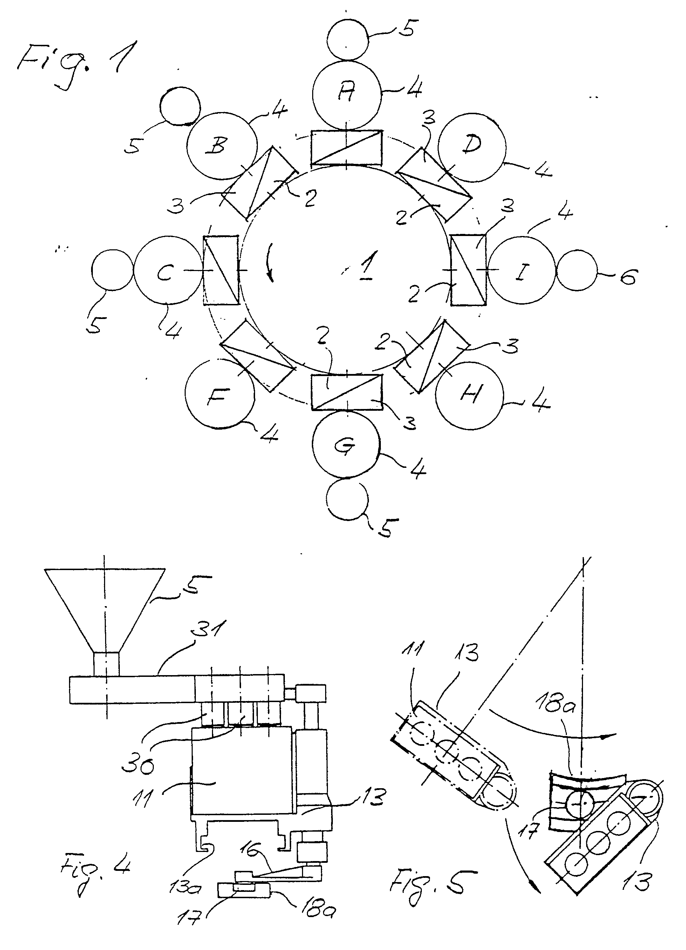

Bei der in Fig. 1 im Grundriß dargestellten Anlage zum Herstellen von Verpackungstuben ist ein Drehkörper 1 vorgesehen, der um eine vertikale Achse drehbar gelagert ist. Der Drehkörper 1 steht mit einem Antrieb (nicht dargestellt) in Verbindung, der diesen schrittweise bewegt und eine Umdrehung in acht Schritten gleicher Größe zurücklegen läßt. Der Drehkörper 1 trägt an seinem Umfang gleichmäßig verteilt acht Arbeitseinheiten 2 sowie oberhalb jeder dieser Arbeitseinheiten 2 eine Trageinheit 3.

Um den Drehkörper 1 herum sind Stationen 4 verteilt angeordnet, die zu ihrer Unterscheidung mit den Buchstaben A-D und E-I bezeichnet sind. Dabei wirken die Stationen A-C mit den Arbeitseinheiten 2 und die Stationen F-I mit den Trageinheiten 3 zusammen, während die Station D sowohl die Arbeitseinheiten 2 wie auch die Trageinheiten 3 bedient. Es sind Zuführvorrichtungen 5 vorgesehen, die den Stationen A, B, C und G zugeordnet sind, während die Station I mit einer Transporteinrichtung 6 zusammenwirkt, um von der Anlage hergestellte Verpackungstuben wegzuführen.

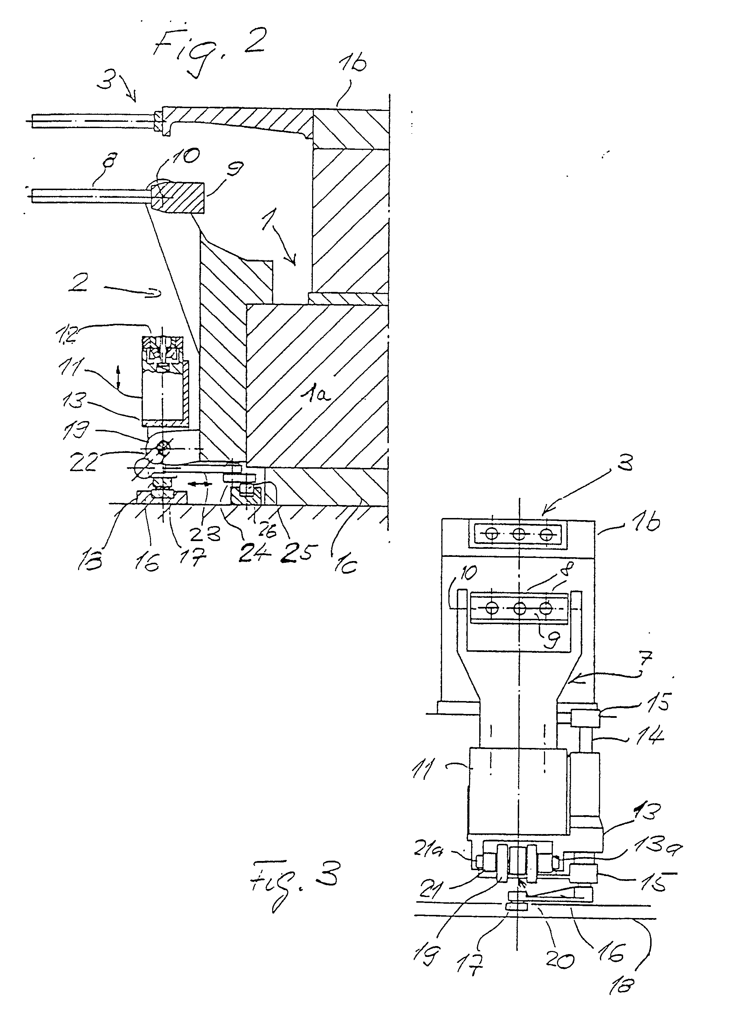

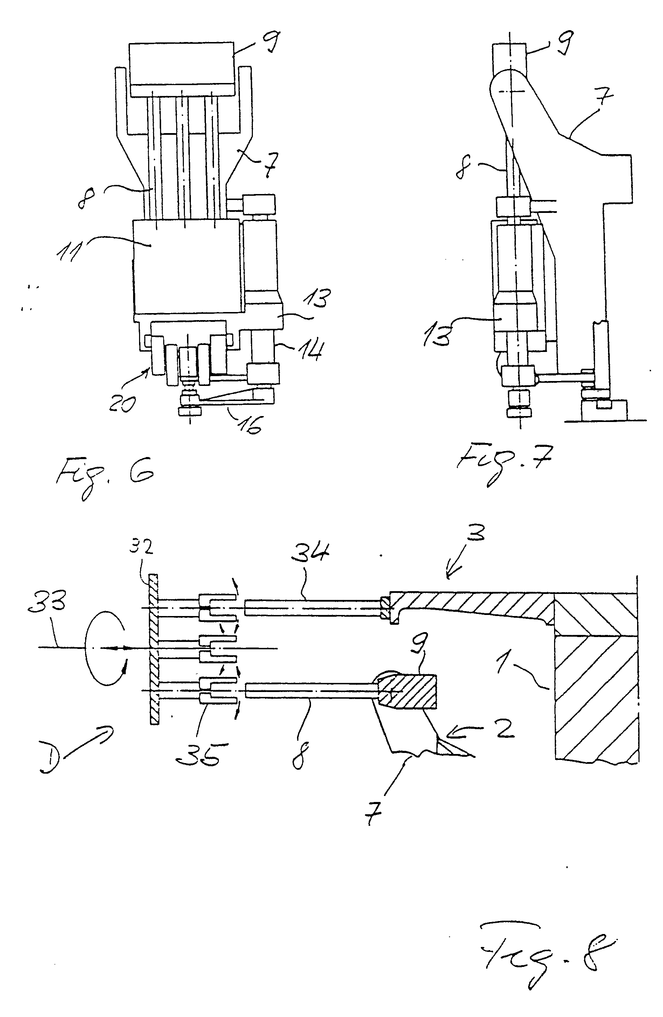

In den Fig. 2 und 3 sind eine Arbeitseinheit 2 und eine über dieser angeordnete Trageinheit 3 zusammen mit dem Drehkörper 1 dargestellt.

Aus Fig. 2 ist dabei ersichtlich, daß der Drehkörper 1 die Arbeitseinheiten 2 an einem unteren Teil 1a und die Trageinheiten 3 an einem oberen Teil 1b abstützt. Jede Arbeitseinheit 2 umfaßt einen Tragrahmen 7, an welchem einerseits drei parallel zueinander angeordnete Dorne 8 an einer um eine horizontale Achse schwenkbaren Dornhalterung 9 befestigt sind. Die Längsachsen der Dorne 8 schneiden dabei die Schwenkachse 10 der Dornhalterung 9. Andererseits sind in einem Gehäuse 11 die Matrizen 12 in einem dem Abstand der Dorne 8 untereinander entsprechenden Abstand abgeordnet, wobei das Gehäuse 11 an einem Matrizensupport 13 befestigt ist. Der Matrizensupport 13 ist an einer vertikalen Keilwelle 14 verschiebbar geführt, welche ihrerseits drehbar in am Tragrahmen 7 befestigten Lagerungen 15 gehalten ist. Die Keilwelle 14 trägt einen Arm 16, der mit einer an seinem freien Ende befestigten Rolle 17 in eine stationäre Führungsbahn 18 eingreift. Schließlich sind in Lagerelementen 19 des Tragrahmens 7 Betätigungsmittel 20 abgestützt, die eine Exzenterwelle 21 sowie einen Betätigungshebel 22 umfassen. Die Exzenterwelle 21 greift mit an beiden Enden angebrachten exzentrischen Zapfen 21a in Nutbahnen 13a ein, die im Matrizensupport 13 horizontal verlaufend angebracht sind. In den Fig. 2 und 3 ist der Matrizensupport 13 in seiner unteren Endlage dargestellt, in welcher er sich an einem nicht dargestellten Anschlag an der Keilwelle 14 abstützt. Aus dieser unteren Endlage ist der Matrizensupport 13 durch einen am Betätigungshebel 22 angreifenden Lenker 23 verschwenkbar (Fig. 2), der seinerseits mit einem am Tragrahmen 7 gelagerten Hebel 24 verbunden ist. Eine am Hebel 24 befestigte Rolle 25 greift in eine Betätigungskulisse 26 ein, die dem stationären Sockel 1c des Drehkörpers 1 benachbart verläuft.

In den Fig. 2 und 3 ist die Dornhalterung 9 zusammen mit den Dornen 8 in einer Ausgangsstellung dargestellt, in welcher die Dorne 8 etwa horizontal verlaufen und an entsprechenden Stationen 4, z. B. an den Stationen A und B der Anlage, mit für die Herstellung der Tuben bestimmten, vorgefertigten Teilen, wie etwa einem Kopfeinsatz oder einem Tubenrohr beladen werden können. Derartige Stationen, wie auch die entsprechenden Zuführvorrichtungen 5 sind bekannt und bedürfen deshalb keiner Erläuterung. Mit der Dornhalterung 9 wirken nicht dargestellte Steuermittel zusammen, um diese beispielsweise während der Drehung des Drehkörpers 1 um einen Schritt, z. B. von der Station B zu der Station C aus der horizontalen Lage der Dorne 8 in eine nach abwärts gerichtete vertikale Lage zu bewegen. Die Bewegung der Steuermittel kann dabei statt von einem eigenen Antrieb vom Antrieb des Drehkörpers 1 bzw. der Schrittbewegung abgeleitet sein.

Gleichfalls von der Schrittbewegung des Drehkörpers 1 abgeleitet ist die Verschwenkung des Matrizensupports 13 aus der Ausgangslage nach den Fig. 2 und 3 in die in Fig. 4 und 5 dargestellte Lage. Diese Verschwenkung entsteht durch den Verlauf der Führungsbahn 18 von der Station B zur Station C, so daß dem Arm 16 eine Bewegung im Gegenuhrzeigersinn erteilt wird, die eine entsprechende Drehbewegung der Keilwelle 14 bewirkt. Kurz vor dem Erreichen der Station C läuft die Rolle 17 am Arm 16 aus der starren Führungsbahn 18 in einen bezogen auf die Achse des Drehkörpers 1 radial beweglichen Bahnabschnitt 18a ein. Aus Fig. 4 und 5 ist weiter ersichtlich, daß die Matrizen 12 in der ausgeschwenkten Lage gleichachsig unter entsprechend distanzierten Düsen 30 eines Materialgebers 31 liegen, der in der Station C angeordnet ist. Der Materialgeber 31, der als Zuführvorrichtung 5 mit einem Trichter zur Aufnahme von Kunststoffgranulat ausgestattet ist, liefert den Düsen 30 den Kunststoff in durch Wärme plastifiziertem Zustand. Die Düsen 30 geben ihrerseits dosierte Mengen von plastifiziertem Kunststoff in Gestalt von z. B. ringförmig geformten Rohlingen an die Matrizen 12 ab.

Sobald die Matrizen 12 den Kunststoff erhalten haben, wird der Matrizensupport 13 durch auf den beweglichen Bahnabschnitt 18 a einwirkende, nicht dargestellte Antriebsmittel im Uhrzeigersinn in seine Ausgangslage zurückgebracht und zwar erfindungsgemäß noch bevor eine weitere Schrittbewegung des Drehkörpers 1 begonnen hat. Die Antriebsmittel für den Bahnabschnitt können durch einen mit dem Antrieb des Drehkörpers 1 verbundenen Getriebzweig gebildet und damit mit der entsprechenden Stillstandsperiode des Drehkörpers 1 zeitlich abgestimmt die Bewegung durchführen. Durch die Verschwenkung des Matrizensupportes 13 in seine Ausgangslage gelangen die Nutbahnen 13a wieder in Eingriff mit den Zapfen 21 a der Exzenterwelle 21, die bei der vorangehenden Verschwenkung in die Stellung gemäß Fig. 4 verlassen wurden.

Sobald nun eine weitere Schrittbewegung des Drehkörpers 1 beginnt, in welcher sich die entsprechende Arbeitseinheit 2 aus der Station C wegbewegt, wird die Exzenterwelle 21 durch den Eingriff der Rolle 25 in die Betätigungskulisse 26 verdreht. Damit wird der Matrizensupport 13 auf der Keilwelle 14 nach oben bewegt, wobei die Matrizen 12, die mit den Dornen 8 schon in den gemeinsamen Arbeitsachsen liegen, mit den Dornen 8 den Preßvorgang durchführen können.

Hier ist nachzutragen, daß die Dorne 8, die in der Station A mit Einsatzteilen für den herzustellenden Tubenkopf bestückt wurden, in der Station B mit Rohrabschnitten bestückt worden sind. Beim Verpressen des plastifizierten Kunststoffes wird nun der entstehende Tubenkopf mit dem entsprechenden Rohrabschnitt sowie dem Einsatzteil verbunden.

Die Arbeitseinheiten 2 durchwandern mit ihren Tragrahmen 7 in der in Fig. 6 und 7 dargestellten Lage der Teile die Umlaufstrecke von der Station C bis zu einer Stellung, die der Station I entspricht. Dabei halten die Betätigungsmittel 20 den Matrizensupport 13 in der Preßstellung, wobei durch die in nicht dargestellter Weise gekühlten Matrizen 12 eine zumindest teilweise Abkühlung der Tuben bzw. Tubenköpfe stattfindet.

Damit der Verformungsdruck in jeder Form erreicht wird und während der Abkühlphase aufrechterhalten bleibt, sind die Dorne 8 in den Dornhalterungen 9 aus einer Ruhelage axial verschiebbar angeordnet (nicht dargestellt) und zwar gegen die Kraft von ebenfalls nicht dargestellten, vorgespannten Federn. In der Preßstellung des Matrizensupports 13 halten die aus ihrer Ruhelage verschobenen Dorne 8 mit der Vorspannkraft dieser Federn den Verformungsdruck aufrecht.

Jeder Tragrahmen 7 fängt die für die Aufrechterhaltung des Verformungsdruckes notwendigen Kräfte in sich selbst ab, indem sowohl die Betätigungsmittel 20, die indirekt auf die Matrize 12 einwirken, als auch die Dornhalterungen 9, an welchen sich vorgespannte Federn abstützen, am Tragrahmen 7 gelagert sind.

Die Führungsbahn 18 verläuft in ihrem, an den beweglichen Bahnabschnitt 18a anschließenden Teil kreisförmig mit dem Mittelpunkt in der Achse des Drehkörpers 1 und erstreckt sich unverändert bis zur Station B. Der bewegliche Bahnabschnitt 18a wird in die in Fig. 5 dargestellte Lage zurückbewegt, sobald er von Rolle 17 freigegeben worden ist, um die Rolle 17 einer nachfolgenden Arbeitseinheit 2 bei der Bewegung in die Station C aufzunehmen.

Die Betätigungskulisse 26 verursacht bei der Bewegung einer Arbeitseinheit 2 zur Station D das Absenken des Matrizensupports 13 in seine untere Endlage. Sobald die Matrizen 12 dabei Tuben auf den Dornen 8 vollständig freigegeben haben, werden die Dorne 8 in die horizontale Ausgangslage verschwenkt. In dieser Stellung erreichen die Arbeitseinheiten 2 die Station D, die eine Umsetzstation für die hergestellten Tuben bildet.

Die Umsetzstation D weist, wie aus Fig. 8 ersichtlich ist, einen Rotor 32 auf, der z. B. auf einer nicht dargestellten horizontalen Keilwelle zwischen zwei Endlagen verschiebbar ist, wobei diese Keilwelle von einem nicht dargestellen Antrieb in Schritten von jeweils 180° verdreht wird. Die Achse 33 der Keilwelle verläuft mittig zwischen den Ebenen, in welchen einerseits Achsen der Dorne 8 und andererseits die Achsen von den Dornen in ihrer Anzahl entsprechenden Tragkörpern 34 der Trageinheiten 3 liegen. Der Rotor 32 umfaßt sechs den Dornen 8 bzw. den Tragkörpern 34 zugekehrte Greifer 35, von denen je drei in zwei parallelen Reihen angeordnet sind. Der Abstand der Reihen entspricht dem Abstand zwischen den vorgenannten Achsen der Dorne 8 und der Tragkörper 34. Fig. 8 zeigt den Rotor 32 auf halbem Weg zwischen zwei Stillstandspositionen, in welchem die Reihen horizontal liegen und je ein Greifer 35 eine zu einem Dorn 8 oder einem Tragkörper 34 koaxiale Lage einnimmt. Von den z. B. pneumatisch betätigbaren Greifern 35 können dabei jene der unteren Reihe Tuben auf den Dornen 8 erfassen, durch die Bewegung des Rotors 32 in axialer Richtung von diesen Dornen 8 abziehen, mit der Drehung des Rotors 32 um einen Schritt um 180° verschwenken bzw. die Lage der oberen Reihe einnehmen lassen und schließlich auf die Tragkörper 34 aufschieben. Dabei kann während der Drehbewegung des Rotors 32 durch eine Schrittbewegung des Drehkörpers 1 eine nachfolgende Arbeitseinheit 2 zur Station D gelangt sein, womit die Greifer 35 die erfaßten Tuben der vorausgegangenen Arbeitseinheit 2 den Tragkörpern 34 der nachfolgenden Trageinheit 3 übergeben. Während die Greifer 35 der oberen Reihe diese Tuben freigeben, können die Greifer 35 der unteren Reihe jene Tuben erfassen, welche sich auf den Dornen 8 der neuen Arbeitseinheit 2 befinden usw. Die Verschiebung des Rotors 32 in axialer Richtung kann vom gleichen Antrieb abgeleitet sein, welcher diesem die Drehbewegung erteilt.

In der durch die Trageinheiten 3 gebildeten Ebene können an den Tuben weitere Operationen durchgeführt werden. So können beispielsweise an den Stationen F und H Kontrollen stattfinden, während beispielsweise an der Station G Kappen aufgesetzt bzw. aufgeschraubt werden können, nachdem die Tuben praktisch vollständig abgekühlt wurden. An der Station I findet schließlich das Entladen der Tuben von den Tragkörpern 34 sowie die Übergabe an die Transporteinrichtung 6 statt.

**Patentansprüche**

1. Anlage zum Herstellen von Verpackungsbehältern, insbesondere Tuben, aus vorgefertigten Rohrkörpern und Endstücken aus thermoplastischem Kunststoff, die beim Pressen mit den Rohrkörpern verbunden werden, mit einer Mehrzahl von auf einer Umlaufbahn bewegten Formen, die je eine nach oben gekehrte Matrize (12) und einen Dorn (8) umfassen, sowie mit einer Rohrkörper-Ladestation (A,B) einer eine Düse (30) aufweisenden Materialgeberstation (C,31) und einer Behälter-Entladestation (D), die voneinander distanziert entlang der Umlaufbahn angeordnet sind und mit Betätigungsmitteln (20), um Matrize (12) und Dorn (8) jeder Form in einer gemeinsamen Arbeitsachse relativ zueinander zu verschieben, bekannt, bei der eine Mehrzahl von auf der Umlaufbahn bewegten Tragrahmen (7) umfassenden Arbeitseinheiten (2) vorgesehen ist, wobei jeder Tragrahmen (7) mindestens die Matrize (12) und den Dorn (8) einer Form sowie die Betätigungsmittel (20) derselben abstützt, und die Matrizen (12) und die Düse (30) relativ zueinander in eine gemeinsame Achslage beweglich sind,

dadurch gekennzeichnet,

daß der Dorn (8) um eine horizontale Achse (10) zwischen einer nach unten gerichteten Arbeitsstellung und einer Ladestellung verschwenkbar ist, und daß die Matrize (12) und die Düse (30) nicht nur relativ zueinander sondern auch quer zur Umlaufbahn in eine gemeinsame Achslage beweglich sind.

2. Anlage nach Anspruch 1, dadurch gekennzeichnet, daß die Matrizen (12) an den Tragrahmen (7) in den Arbeitsachsen verschiebbar geführt sind (Keilwelle 14) sowie an den Tragrahmen (7) zwischen der Arbeitsachse und einer zu dieser parallelen Materialübernahmeachse quer beweglich geführt sind (Betätigungshebel 22, Lenker 23).

3. Anlage nach Anspruch 1 oder 2, dadurch gekennzeichnet, daß jeder Tragrahmen (7) eine um eine horizontale Achse (10) schwenkbare Dornhalterung (9) sowie einen vertikal verschiebbare (Keilwelle 14) und um eine vertikale Achse verschwenkbaren Matrizensupport (13) aufweist, der die Matrizen (12) trägt.

4. Anlage nach Anspruch 3, dadurch gekennzeichnet, daß in jeder Dornhalterung (9) eine Mehrzahl von Dornen (8), bevorzugt drei, axial verschiebbar geführt und unter der Wirkung von Vorspannmitteln in einer Ausgangslage gehalten sind, daß jeder Matrizensupport (13) eine entsprechende Anzahl von in einem gemeinsamen Gehäuse (11) angeordneten Matrizen (12) abstützt, und daß die Zufuhrvorrichtung (5) der Materialgeberstation eine entsprechende Anzahl von Düsen (30) aufweist.

5. Anlage nach einem der Ansprüche 3 oder 4, dadurch gekennzeichnet, daß die Achsen der Dorne (8) jeder Dornhalterung (9) in einer die Schwenkachse (10) derselben enthaltenden Ebene liegen.

6. Anlage nach Anspruch 3, 4 oder 5, dadurch gekennzeichnet, daß der Matrizensupport (13) an einer vertikalen Keilwelle (14) verschiebbar geführt ist, die im Tragrahmen (7) drehbar gelagert ist und mit Schwenkmitteln (21,22) in Verbindung steht.

7. Anlage nach einem der vorangehenden Ansprüche, dadurch gekennzeichnet, daß die Tragrahmen (7) am Umfang eines Drehkörpers (1) starr befestigt sind.

8. Anlage nach Anspruch 7, dadurch gekennzeichnet, daß der Drehkörper (1) in einem stationären Maschinensockel (1c) gelagert ist, welcher Betätigungskulissen (26) aufweist.

9. Anlage nach einem der Ansprüche 1 bis 8, dadurch gekennzeichnet, daß oberhalb jeder Arbeitseinheit (2) eine Trageinheit (3) mit dieser synchron umlaufend angeordnet ist, wobei entlang der Umlaufbahn mindestens eine den Trageinheiten (3) zugeordnete Arbeitsstation (A-C und F-I) sowie eine Umsetzstation (D) vorgesehen sind, und wobei die Umsetzstation (D) Greifer (35) aufweist, um Verpackungsbehälter jeweils einer Arbeitseinheit (2) zu entnehmen und einer Trageinheit (3) zu übergeben.

10. Anlage nach einem der vorhergehenden Ansprüche, dadurch gekennzeichnet, daß die Trageinheiten (3) am Drehkörper (1) befestigt sind.

11. Anlage nach einem der Ansprüche 4 bis 8 und 10, dadurch gekennzeichnet, daß die Trageinheiten (3) je eine der Anzahl der Dorne (8) einer Arbeitseinheit (2) entsprechende Anzahl von horizontal angeordneten Tragkörpern (34) aufweisen.

12. Anlage nach einem der Ansprüche 9 bis 11, dadurch gekennzeichnet, daß die Umsetzstation (D) einen die Greifer (35) aufweisenden, um eine horizontale Achse (33) schrittweise bewegten und axial zwischen zwei Stellungen verschwenkbaren Rotor (32) hat.

## Claims

1. Installation for producing packaging containers, especially tubes, from prefabricated tubular bodies and end pieces of thermoplastic, which are connected to the tubular bodies by compression moulding, comprising a plurality of moulds movable along a circular path, each including an upwardly directed female mould portion (12) and a mandrel (8), and comprising a tubular body loading station (A, B), a material feed station (C, 31) having a nozzle (30) and a container unloading station (D), which are arranged at a distance from one another along the circular path and comprising actuating means (20) in order to displace the female mould portion (12) and mandrel (8) of each mould relative to one another along a common working axis, known, in which a plurality of working units (2) movable along the circular path and including supporting frames (7) are provided, each supporting frame (7) supporting at least the female mould portion (12) and the mandrel (8) of a mould and the actuating means (20) therefor, and the female mould portion (12) and the nozzle (30) being movable relative to one another into a common axial position, characterised in that the mandrel (8) can be pivoted about a horizontal axis (10) between a downwardly directed working position and a loading position, and that the female mould portion (12) and the nozzle (30) are movable not only relative to one another, but also transversely to the circular path into a common axial position.

2. Installation according to claim 1, characterised in that the female mould portions (12) are displaceably guided on the supporting frames (7) along the working axes (splined shaft 14) and are transversely guided on the supporting frames (7) between the working axis and a material transfer axis parallel thereto (actuating lever 22, linkage means 23).

3. Installation according to claim 1 or claim 2, characterised in that each supporting frame (7) has a mandrel support (9) which can be pivoted about a horizontal axis (10) and a female mould support (13) which is vertically displaceable (splined shaft 14), can be pivoted about a vertical axis and supports the female mould portions (12).

4. Installation according to claim 3, characterised in that a plurality of mandrels (8), preferably three, are axially displaceably guided in each mandrel support (9) and are held in a starting position by the action of tensioning means, that each female mould support (13) supports a corresponding number of female mould portions (12) arranged in a common housing (11), and that the feed means (5) of the material feed station has a corresponding number of nozzles (30).

5. Installation according to claim 3 or claim 4, characterised in that the axes of the mandrels (8) of each mandrel support (9) lie in a plane containing the pivot axis (10) thereof.

6. Installation according to claim 3, 4 or 5, characterised in that the female mould support (13) is displaceably guided on a vertical splined shaft (14) which is rotatably mounted in the supporting frame (7) and is connected to pivot means (21, 22).

7. Installation according to one of the preceding claims, characterised in that the supporting frames (7) are rigidly fixed to the circumference of a rotary body (1).

8. Installation according to claim 7, characterised in that the rotary body (1) is mounted in a stationary machine base (1c) having actuating slideways (26).

9. Installation according to one of claims 1 to 8, characterised in that a carrier unit (3) is arranged above each working unit (2), rotating synchronously therewith, at least one working station (A-C and F-I) associated with each carrier unit (3) and a transfer station (D) being provided along the circular path, and the transfer station (D) having grippers (35) to take packaging containers from a respective working unit (2) and to transfer them to a carrier unit (3).

10. Installation according to one of the preceding claims, characterised in that the carrier units (3) are fixed to the rotary body (1).

11. Installation according to one of claims 4 to 8 and 10, characterised in that the carrier units (3) each have a number of horizontally arranged carrier bodies (34) corresponding to the number of mandrels (8) of a working unit (2).

12. Installation according to one of claims 9 to 11, characterised in that the transfer station (D) has a rotor (32) having grippers (35), wherein said rotor is movable stepwise about a horizontal axis (33) and can be pivoted axially between two positions.

## Revendications

1. Installation pour la fabrication de récipients d'emballage, notamment des tubes, à partir de corps tubulaires préfabriqués et de pièces d'extrémité en matière plastique thermoplastique, qui sont liées aux corps tubulaires au cours du moulage par compression, comportant plusieurs moules déplacés sur une trajectoire de révolution et comprenant chacun une matrice (12) tournée vers le haut et un mandrin (8), comportant également, disposés de manière espacée sur la trajectoire de révolution, un poste de chargement de corps tubulaires (A, B), un poste d'alimentation en matière (C, 31) équipé d'une buse (30) et un poste de déchargement des récipients (D), et comportant des moyens d'actionnement (20) pour déplacer relativement l'un par rapport à l'autre, de manière connue et selon un axe de travail commun, la matrice (12) et le mandrin (8) de chaque moule, plusieurs unités de travail (2) comprenant des cadres-support (7) déplacés sur la trajectoire de révolution étant prévues, chaque cadre-support (7) supportant au moins la matrice (12) et le mandrin (8) d'un moule ainsi que les moyens d'actionnement (20) de celui-ci, et les matrices (12) et la buse (30) pouvant être déplacées l'une par rapport à l'autre vers une position axiale commune, caractérisée en ce que le mandrin (8) peut pivoter autour d'un axe horizontal (10), entre une position de travail dirigée vers le bas et une position de chargement, et en ce que la matrice (12) et la buse (30) peuvent être déplacées non seulement l'une par rapport à l'autre, mais également transversalement à la trajectoire de révolution, vers une position axiale commune.

2. Installation selon la revendication 1, caractérisée en ce que les matrices (12) sont guidées sur les cadres-support (7) de manière à pouvoir coulisser selon les axes de travail (arbre cannelé 14), et sont également guidées sur les cadres-support (7) de manière à être mobiles transversalement entre l'axe de travail et un axe de transfert de matière parallèle au précédent (levier d'actionnement 22, biellette 23).

3. Installation selon la revendication 1 ou 2, caractérisée en ce que chaque cadre-support (7) comporte un support de mandrins (9) pouvant pivoter autour d'un axe horizontal (10), ainsi qu'un support de matrices (13) susceptible de coulisser verticalement (arbre cannelé 14) et de pivoter autour d'un axe vertical, et portant les matrices (12).

4. Installation selon la revendication 3, caractérisée en ce que dans chaque support de mandrins (9) plusieurs mandrins (8), de préférence au nombre de trois, sont guidés en coulissement axial et sont maintenus dans une position d'origine sous l'action de moyens de précontrainte, en ce que chaque support de matrices (13) supporte un nombre correspondant de matrices (12) disposées dans un carter commun (11), et en ce que le dispositif d'alimentation (5) du poste d'alimentation en matière comporte un nombre correspondant de buses (30).

5. Installation selon l'une des revendications 3 ou 4, caractérisée en ce que les axes des mandrins (8) de chaque support de mandrins (9) sont situés dans un plan contenant l'axe de pivotement (10) du support de mandrins.

6. Installation selon les revendications 3, 4 ou 5, caractérisée en ce que le support de matrices (13) est guidé en coulissement sur un arbre cannelé vertical (14) qui est monté tournant dans le cadre-support (7) et qui est en liaison avec des moyens de pivotement (21, 22).

7. Installation selon l'une des revendications précédentes, caractérisée en ce que les cadres-support (7) sont fixés de manière rigide à la périphérie d'un corps rotatif (1).

8. Installation selon la revendication 7, caractérisée en ce que le corps rotatif (1) est monté sur une semelle de machine fixe (1c) qui comporte des coulisses d'actionnement (26).

9. Installation selon l'une des revendications 1 à 8, caractérisée en ce qu'une unité de support (3) est disposée au-dessus de chaque unité de travail (2) en étant entraînée en révolution de manière synchronisée avec celle-ci, au moins un poste de travail (A-C et F-I) associé aux unités de support (3) ainsi qu'un poste de transfert (D) étant prévus sur la trajectoire de révolution, et le poste de transfert (D) présentant des pinces de préhension (35) destinées à saisir respectivement des récipients d'emballage d'une unité de travail (2) et à les transférer à une unité de support (3).

10. Installation selon l'une des revendications précédentes, caractérisée en ce que les unités de support (3) sont fixées sur le corps rotatif (1).

11. Installation selon l'une des revendications 4 à 8 et 10, caractérisée en ce que les unités de support (3) comportent chacune un nombre de corps de support (34) disposés horizontalement, correspondant au nombre des mandrins (8) d'une unité de travail (2).

12. Installation selon l'une des revendications 9 à 11, caractérisée en ce que le poste de transfert (D) possède un rotor (32) comportant les pinces de préhension (35), déplacé pas à pas autour d'un axe horizontal (33) et susceptible de coulisser axialement entre deux positions.

Fig. 1

Fig. 4

Fig. 5

9

Fig. 2

Fig. 3

Fig. 6

Fig. 7

Fig. 8